(19) Europäisches Patentamt / European Patent Office / Office européen des brevets

(11) **EP 4 641 700 A1**

(12) **EUROPEAN PATENT APPLICATION**
published in accordance with Art. 153(4) EPC

(43) Date of publication:
**29.10.2025 Bulletin 2025/44**

(21) Application number: **23913922.3**

(22) Date of filing: **03.01.2023**

(51) International Patent Classification (IPC):
**H01M 4/62** *(2006.01)*

(52) Cooperative Patent Classification (CPC):
**H01M 4/62**

(86) International application number:
**PCT/CN2023/070168**

(87) International publication number:
**WO 2024/145762 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **JING, Erdong**
**Ningde, Fujian 352100 (CN)**

• **XIE, Haotian**
**Ningde, Fujian 352100 (CN)**
• **WANG, Donghao**
**Ningde, Fujian 352100 (CN)**
• **ZHANG, Nannan**
**Ningde, Fujian 352100 (CN)**
• **CHEN, Xiao**
**Ningde, Fujian 352100 (CN)**
• **SUN, Xin**
**Ningde, Fujian 352100 (CN)**

(74) Representative: **Gong, Jinping**
**CocreateIP**
**Neumarkter Straße 21**
**81673 München (DE)**

(54) **LITHIUM REPLENISHMENT COMPOSITE MATERIAL AND PREPARATION METHOD THEREFOR, POSITIVE ELECTRODE SHEET, SEPARATOR, SECONDARY BATTERY, AND ELECTRICAL DEVICE**

(57) This application discloses a lithium replenishment composite material and a preparation method thereof, a positive electrode plate, a separator, a secondary battery, and an electrical device, and relates to the field of batteries. The lithium replenishment composite material includes a core and a coating layer containing a conductive material that is disposed outside the core and that at least partially coats the core; a material of the core includes a lithium replenishment agent and a metal catalyst, and the lithium replenishment agent includes an organic lithium replenishment agent. During a first charge cycle of a battery, the organic lithium replenishment agent releases lithium ions to replenish lithium for the negative electrode, while remaining components convert into gases and are expelled from the battery, not affecting a mass energy density or subsequent performance of the battery. The metal catalyst can lower a decomposition potential of the organic lithium replenishment agent, enabling the organic lithium replenishment agent to deliver a greater capacity at a lower potential, achieving lithium replenishment while avoiding irreversible damage to a positive electrode active material structure and an electrolyte at a high potential. The coating layer containing a conductive material can suppress dissolution of metal from the metal catalyst, enhance electrical conductivity of the lithium replenishment composite material, and optimize cycling performance of the battery.

FIG. 1

## Description

### TECHNICAL FIELD

This application relates to the field of lithium battery technology, specifically to a lithium replenishment composite material and a preparation method thereof, a positive electrode plate, a separator, a secondary battery, and an electrical device.

### BACKGROUND

During a first cycle of lithium-ion energy storage devices, formation of a solid electrolyte interphase (SEI) at a negative electrode interface leads to irreversible capacity loss. Reduction in an active lithium amount causes a decrease in an energy density of lithium-ion energy storage devices. To address the issue of reduced battery capacity due to irreversible lithium loss during the initial charge/discharge, prelithiation lithium replenishment technology has become preferred among numerous technologies. Existing prelithiation lithium replenishment technologies mainly use active metallic lithium, not providing satisfactory lithium replenishment effects.

### SUMMARY

### TECHNICAL PROBLEM

The main objective of this application is to provide a lithium replenishment composite material and a preparation method thereof, a positive electrode plate, a separator, a secondary battery, and an electrical device, aiming to provide a lithium replenishment composite material with excellent lithium replenishment effects and to optimize cycling performance of batteries.

### SOLUTION

### TECHNICAL SOLUTION

According to a first aspect, this application provides a lithium replenishment composite material, including a core and a coating layer containing a conductive material that is disposed outside the core and that at least partially coats the core, where a material of the core includes a lithium replenishment agent and a metal catalyst, and the lithium replenishment agent includes an organic lithium replenishment agent.

Thus, the material of the core includes an organic lithium replenishment agent and a metal catalyst. The organic lithium replenishment agent provides a lithium source for lithium replenishment. During the first charge cycle of a battery, the organic lithium replenishment agent releases lithium ions to replenish lithium for the negative electrode, while the remaining components simultaneously convert into gases and are expelled from the battery. This leaves no residue after lithium replenishment, thereby not affecting a mass energy density or subsequent performance of the battery. The metal catalyst can lower a decomposition potential of the organic lithium replenishment agent, enabling the organic lithium replenishment agent to deliver a greater capacity at a lower potential. This achieves effective lithium replenishment while avoiding irreversible damage to the positive electrode active material structure and electrolyte at a high potential. The coating layer containing a conductive material, which at least partially coats the core, can suppress the dissolution of metal from the metal catalyst while enhancing electrical conductivity of the lithium replenishment composite material, thereby improving cycling performance of the battery. In the lithium replenishment composite material provided in this application, because of the coating layer containing a conductive material and the core disposed within the coating layer containing a conductive material, the lithium replenishment composite material exhibits excellent lithium replenishment performance and can optimize the cycling performance of the battery.

In some embodiments, the organic lithium replenishment agent includes at least one of $Li_2C_2O_4$, $Li_2C_4O_4$, $Li_2C_3O_5$, $Li_2C_4O_6$, and $(Li_2C_2O_2N_2)_n$. During the first charge cycle of the battery, the organic lithium replenishment agents release lithium ions to replenish lithium for a negative electrode, while the remaining components simultaneously generate gases such as carbon monoxide, carbon dioxide, nitrogen, or nitrogen oxides, and are expelled from the battery. This leaves no residue after lithium replenishment, thereby not affecting a mass energy density or subsequent performance of the battery.

In some embodiments, the metal catalyst includes at least one of a transition metal oxide, a transition metal nitride, and a transition metal carbide. Transition metals possess incompletely filled valence d-orbitals, resulting in easily deformable electron clouds. Based on the 18-electron rule, a property differs significantly from that of other elements. Due to empty d-orbitals, transition metals readily form coordination complexes. These metal elements utilize hybridized orbitals to accept electrons and achieve stable 16-electron or 18-electron configurations, and therefore can be used as metal catalysts. Therefore, using at least one of a transition metal oxide, transition metal nitride, or transition metal carbide as the metal catalyst leads to excellent catalytic performance.

In some embodiments, the transition metal includes at least one of Ti, V, Mn, Fe, Co, Ni, Cu, Zn, Nb, Mo, In, W, Zr, Ta, and W. Using at least one of the aforementioned transition metals can lower a decomposition potential of the organic lithium replenishment agent, enabling the organic lithium replenishment agent to deliver a greater capacity at a lower potential. This achieves effective lithium replenishment while avoiding irreversible damage to the positive electrode active material structure and electrolyte at a high potential.

In some embodiments, the material of the coating layer containing a conductive material includes at least one of an organic conductive polymer and conductive carbon. The coating layer containing a conductive material being made of the aforementioned substances can reduce the dissolution of transition metals and enhance the overall electrical conductivity of the material, thereby improving both the lithium replenishment capacity and prolonging a lifespan of the battery.

In some embodiments, the material of the coating layer containing a conductive material includes an organic conductive polymer, where the organic conductive polymer includes at least one of polyaniline, polypyrrole, and polythiophene. Polyaniline is a type of conductive polymer material obtained through chemical oxidative polymerization or electrochemical polymerization of aniline monomers. After doping, polyaniline exhibits conductivity and possesses a photoelectric conversion property and a nonlinear optical property. The electrical activity of polyaniline is based on the $\pi$-electron conjugated structure in a molecular chain. As the $\pi$-electron system in the molecular chain expands, the $\pi$-bonding state and $\pi^*$-antibonding state form the valence band and conduction band, respectively. This delocalized $\pi$-electron conjugated structure, upon doping, can form p-type and n-type conductive states. Unlike other conductive polymers that generate cation vacancies under the action of oxidants during doping, the number of electrons does not change during the doping of polyaniline. Instead, the doped protonic acid decomposes to produce $H^+$ and counter anions (such as $Cl^-$, sulfate, and phosphate) entering the main chain and combining with N atoms in amine and imine groups, forming polarons and bipolarons that delocalize into the $\pi$-bonds of the entire molecular chain, thereby giving polyaniline high conductivity. Polyaniline features high charge storage capacity, good stability against oxygen and water, excellent electrochemical performance, low density, reversible oxidation-reduction characteristics, and the like. In composite electrodes, polyaniline can serve as both a conductive matrix and an active material. Polypyrrole is a common conductive polymer with high electrical conductivity, good environmental stability, reversible electrochemical oxidation-reduction characteristic, and strong charge storage capacity, and is an ideal electrode material for polymer secondary batteries. Polythiophene is a common conductive polymer, and polythiophene obtained through electrochemical polymerization in a boron trifluoride diethyl etherate complex exhibits strength greater than that of metallic aluminum. Using at least one of the aforementioned organic conductive polymers further reduces metal dissolution and enhances electrical conductivity.

In some embodiments, the material of the coating layer containing a conductive material includes conductive carbon, where the conductive carbon includes at least one of graphene, carbon nanotubes, acetylene black, Super P, Ketjen black, or organic-derived carbon. Graphene (graphene) is a novel material that includes carbon atoms connected via $sp^2$ hybridization and that is tightly packed into a single-layer two-dimensional honeycomb lattice structure. Graphene exhibits excellent optical, electrical, and mechanical properties, holding significant application prospects in materials science, micro-nano processing, energy, biomedicine, and drug delivery, and is considered a revolutionary material for the future. Carbon nanotubes, as a one-dimensional nanomaterial, are lightweight with a perfect hexagonal structure, possessing exceptional mechanical, electrical, and chemical properties. Acetylene black is carbon black produced through continuous pyrolysis of acetylene with purity over 99%. The acetylene is derived from byproduct gas that is generated during calcium carbide production or naphtha (crude gasoline) pyrolysis and that undergoes decomposition and purification processes. Compared with furnace black, acetylene black exhibits more developed crystalline and secondary structures, resulting in superior electrical conductivity and liquid absorption properties. Additionally, it contains fewer impurities such as heavy metal and demonstrates lower self-discharge losses. Super P (SP) is a conductive carbon black prepared via the furnace method (MMM method), consisting of primary particles (primary structure) approximately 40 nm in diameter that aggregate into a primary aggregate (secondary structure) of 150 nm to 200 nm that is further processed through soft aggregation and artificial compression, forming a grape-like chain structure. In lithium-ion batteries, SP primarily functions by dispersing 150 nm to 200 nm primary aggregates around active materials to form a multi-branched conductive network, thereby reducing the physical internal resistance of the battery and enhancing electron conductivity. Ketjen carbon black (Ketjen black) is a carbon black produced through a highly original specialized process. Compared with ordinary conductive carbon black, Ketjen black requires only a minimal addition to achieve high conductivity, and therefore Ketjen black is a premium conductive carbon black. Using at least one of the aforementioned conductive carbons further reduces metal dissolution and enhances electrical conductivity.

In some embodiments, a $D_v50$ particle size of the lithium replenishment composite material is 2 $\mu$m to 30 $\mu$m. If the $D_v50$ particle size of the lithium replenishment composite material is excessively small, slurry agglomeration and gelation, increased viscosity, and reduced solid content may occur. If the particle size is excessively large, polarization of the lithium ion release reaction increases in the lithium replenishment agent, thereby reducing lithium replenishment efficiency. The aforementioned particle size helps fully realize lithium replenishment performance and optimizes the cycling performance of the battery. The $D_v50$ particle size of the metal catalyst is 0.1 $\mu$m to 10 $\mu$m. If the particle size is excessively small, synthesis becomes difficult, hindering industrialization, and may lead to reduced stability of the catalytic material. If the particle size is excessively large, it weakens the catalytic activity of the metal catalyst. A thickness of the coating layer containing a conductive material is 2 nm to 100 nm. The thickness of the coating layer containing a conductive material directly affects coating performance. If the coating layer containing a conductive material of the composite lithium replenishment agent shell is excessively thin, metal ion dissolution cannot be effectively suppressed or a good conductive network cannot be provided. If the coating layer containing a conductive material is excessively thick, lithium ion transmission is hindered and the lithium replenishment component is reduced, thereby affecting a lithium replenishment capacity. The aforementioned thickness can effectively inhibit metal dissolution and enhance the electrical conductivity of the lithium replenishment composite material.

In some embodiments, the $D_v50$ particle size of the lithium replenishment composite material is 5 $\mu$m to 10 $\mu$m. This particle size further facilitates fully realizing lithium replenishment performance and optimizing the cycling performance of the battery. The $D_v50$ particle size of the metal catalyst is 0.5 $\mu$m to 5 $\mu$m. If the particle size is excessively small, synthesis becomes difficult, hindering industrialization, and may lead to reduced stability of the catalytic material. If the particle size is excessively large, the catalytic activity of the metal catalyst is weakened. The thickness of the coating layer containing a conductive material is 5 nm to 50 nm. This thickness inhibits metal dissolution and enhances the electrical conductivity of the lithium replenishment composite material.

In some embodiments, a decomposition voltage of the lithium replenishment composite material is 4.12 V to 4.35 V. The lithium composite material has a relatively low decomposition voltage, enabling the organic lithium replenishment agent to deliver a greater capacity at a lower potential. This achieves effective lithium replenishment while avoiding irreversible damage to the positive electrode active material structure and electrolyte at a high potential.

In some embodiments, the mass ratio of the metal catalyst to the lithium replenishment agent is (1 to 30):100. If a proportion of the metal catalyst in the composite lithium replenishment agent is excessively low, it cannot adequately catalyze the lithium release of the lithium replenishment agent. If the proportion is excessively high, the lithium replenishment component is reduced, affecting a lithium replenishment capacity. At the aforementioned ratio, the proportion is appropriate.

In some embodiments, the mass ratio of the metal catalyst to the lithium replenishment agent is (5 to 10):100. At this ratio, it facilitates adequate catalysis of the lithium release of the lithium replenishment agent and provides a higher lithium replenishment capacity.

According to a second aspect, this application provides a preparation method of the lithium replenishment composite material described in the aforementioned embodiments, including the following steps:

dissolving an organic lithium replenishment agent in a solvent to form a solution, and adding a metal catalyst to the solution to obtain a suspension,
recrystallizing the suspension to obtain a core; and
preparing a coating layer containing a conductive material outside the core to obtain the lithium replenishment composite material.

According to the preparation method of the lithium replenishment composite material provided by this application, the lithium replenishment composite material is synthesized through recrystallization, which is an in-situ method. This allows thorough and uniform mixing of the lithium replenishment agent and the metal catalyst. In addition, it enables control over a particle size of the lithium replenishment composite material.

According to a third aspect, this application provides a positive electrode plate, including the lithium replenishment composite material described in the aforementioned embodiments or the lithium replenishment composite material obtained according to the preparation method described in the aforementioned embodiments.

In some embodiments, the positive electrode plate includes a positive electrode material, where the positive electrode material includes the lithium replenishment composite material. The lithium replenishment composite material in the aforementioned embodiments directly used with the positive electrode material for coating, ensuring good compatibility with existing processes and high safety.

In some embodiments, the positive electrode material further includes a positive electrode active material, where a mass percentage of the lithium replenishment composite material in the positive electrode material is 0.5% to 20%. The proportion of the lithium replenishment composite material in the positive electrode material affects a lifespan and an energy density of a battery. When the proportion of the lithium replenishment composite material is excessively low, an amount of lithium ions replenished during the first charge cycle is insufficient to compensate the consumption of active lithium ions during long-term cycling of the battery, failing to achieve long lifespan. When the proportion of the lithium replenishment material is excessively high, the proportion of active material available for subsequent reversible cycling decreases, thereby affecting the energy density of the battery. Therefore, an appropriate proportion of the lithium replenishment agent is crucial for balancing the lifespan and energy density of the battery. At the aforementioned proportion, the consumption of active lithium ions during long-term cycling of the battery can be compensated without affecting the energy density of the battery.

In some embodiments, a mass percentage of the lithium replenishment composite material in the positive electrode material is 1% to 10%. This proportion provides better lithium replenishment and improves the energy density of the battery.

According to a fourth aspect, this application provides a separator, including the lithium replenishment composite material described in the aforementioned embodiments or the lithium replenishment composite material obtained by using the preparation method described in the aforementioned embodiments.

According to a fifth aspect, this application provides a secondary battery, including the positive electrode plate described in the aforementioned embodiments or the separator described in the aforementioned embodiments.

According to a sixth aspect, this application provides an electrical device, including the secondary battery described in the aforementioned embodiments.

## BENEFICIAL EFFECTS OF PRESENT INVENTION

## BENEFICIAL EFFECTS

The material of the core includes an organic lithium replenishment agent and a metal catalyst. The organic lithium replenishment agent provides a lithium source for lithium replenishment. During the first charge cycle of a battery, the organic lithium replenishment agent releases lithium ions to replenish lithium for the negative electrode, while the remaining components simultaneously convert into gases and are expelled from the battery. This leaves no residue after lithium replenishment, thereby not affecting a mass energy density or subsequent performance of the battery. The metal catalyst can lower a decomposition potential of the organic lithium replenishment agent, enabling the organic lithium replenishment agent to deliver a greater capacity at a lower potential. This achieves effective lithium replenishment while avoiding irreversible damage to the positive electrode active material structure and electrolyte at a high potential. The coating layer containing a conductive material, which at least partially coats the core, can suppress the dissolution of metal from the metal catalyst while enhancing electrical conductivity of the lithium replenishment composite material, thereby improving cycling performance of the battery. In the lithium replenishment composite material provided in this application, because of the coating layer containing a conductive material and the core disposed within the coating layer containing a conductive material, the lithium replenishment composite material exhibits excellent lithium replenishment performance and can optimize the cycling performance of the battery.

## BRIEF DESCRIPTION OF DRAWINGS

## DESCRIPTION OF DRAWINGS

To more clearly illustrate the technical solutions in the embodiments of the present invention or in the prior art, the drawings required for the description of these embodiments or the prior art are briefly introduced below. It is clear that the drawings described below are merely some embodiments of the present invention. For persons of ordinary skill in the art, other related drawings can be obtained based on these drawings without creative efforts.

FIG. 1 is a schematic structural diagram of a lithium replenishment composite material according to an embodiment of this application;
FIG. 2 is a voltage-specific capacity curve of batteries according to Example 3 and Comparative example 2 of this application; and
FIG. 3 is a cycling performance graph of batteries according to Example 3 and Comparative example 2 of this application.

Reference signs in the embodiments are as follows:
coating layer containing a conductive material 1; lithium replenishment agent 2; and metal catalyst 3.

The realization of the objectives, functional features, and advantages of the present invention are further described with reference to these embodiments and the drawings.

## EMBODIMENTS OF PRENSENT INVENTION

## DESCRIPTION OF EMBODIMENTS

To make the objectives, technical solutions, and advantages of the embodiments of the present invention clearer, the technical solutions in embodiments of the present invention are described clearly and completely below. For those not specifying specific conditions in the embodiments, conventional conditions or conditions recommended by manufacturers are followed. Reagents or instruments used, if no manufacturer is indicated, are conventional products commercially available.

It should be noted that, for the embodiments not specifying specific conditions, conventional conditions or conditions recommended by the manufacturer are followed. The reagents or instruments used, if no manufacturer is indicated, are conventional products commercially available. Additionally, the term "and/or" appearing throughout the specification includes three parallel schemes. For example, "A and/or B" includes scheme A, scheme B, or a scheme where both A and B are satisfied simultaneously. Furthermore, the technical solutions between various embodiments can be combined with each other, but such combination must be feasible for persons of ordinary skill in the art. When the combination of technical solutions results in contradictions or cannot be realized, such a combination should be deemed non-existent and not within the protection scope claimed by the present invention. All other embodiments obtained by persons of ordinary skill in the art based on the embodiments of this application without creative efforts shall fall within the protection scope of this application.

During the first cycle of lithium-ion energy storage devices, formation of a solid electrolyte interphase (SEI) at a negative electrode interface leads to irreversible capacity loss. The reduction in an active lithium amount causes a decrease in an energy density of lithium-ion energy storage devices. To address the issue of reduced battery capacity due to irreversible lithium loss during the initial charge/discharge, prelithiation lithium replenishment technology has become the preferred choice among numerous technologies. Existing prelithiation lithium replenishment technologies mainly use active metallic lithium, not providing satisfactory lithium replenishment effects.

Existing prelithiation lithium replenishment technologies primarily include negative electrode prelithiation and positive electrode prelithiation. Negative electrode lithium replenishment mainly uses active metallic lithium, which imposes high requirements on manufacturing processes and operating environments and has safety hazards, and therefore is unsuitable for massive production. Positive electrode prelithiation technology primarily includes applying lithiated materials directly with positive electrode materials, offering good compatibility with existing processes and high safety.

Positive electrode prelithiation materials include inorganic lithium-rich materials and organic lithium replenishment materials. Inorganic lithium-rich materials are hindered from commercial application due to poor air stability and residual issues. Organic lithium replenishment materials offer high theoretical capacity, good air stability, and low costs, and therefore is promising for practical use as positive electrode lithium replenishment materials. However, using organic lithium replenishment materials alone as additives typically results in high decomposition potentials, which are not conducive to lithium ion deintercalation. Additionally, at a high potential, side reactions between the electrode and electrolyte are prone to occur, leading to poor cycling performance.

Based on this, researchers in the field have made improvements. For example, a composite lithium replenishment material contains an organic lithium salt and a metal catalyst, where the organic lithium replenishment material is a lithium carbonate compound, and the metal catalyst is a transition metal compound with a heterojunction structure provided by the present invention. Compared to using a single transition metal oxide or transition metal nitride as the metal catalyst, this can further lower the decomposition potential of the organic lithium salt, increase a lithium replenishment capacity, and improve battery cycling performance. Another example is an inorganic lithium replenishment material (one or more of lithium peroxide, lithium oxide, lithium sulfate, lithium borate, lithium metasilicate, lithium orthosilicate, and lithium phosphate). After compounding a conductive material on the surface of the lithium replenishment agent, using an inorganic sulfide as a reducing agent and adding metal or non-metal catalysts can effectively lower the potential at which the lithium replenishment agent delivers capacity.

However, the inventors have found through extensive experiments that the aforementioned solutions still have flaws: first, the issue of metal dissolution from metal catalysts that contain transition metal during subsequent use of battery is not addressed; and second, the poor conductivity of lithium replenishment agents is not improved.

Based on this, through repeated experiments and extensive literature review, to simultaneously address the issues of conductivity and metal dissolution of lithium replenishment agents, the inventors have surprisingly discovered that both issues can be resolved by mixing a lithium replenishment agent with a metal catalyst and applying them into a conductive material to form a composite material with a structure similar to a core-shell structure.

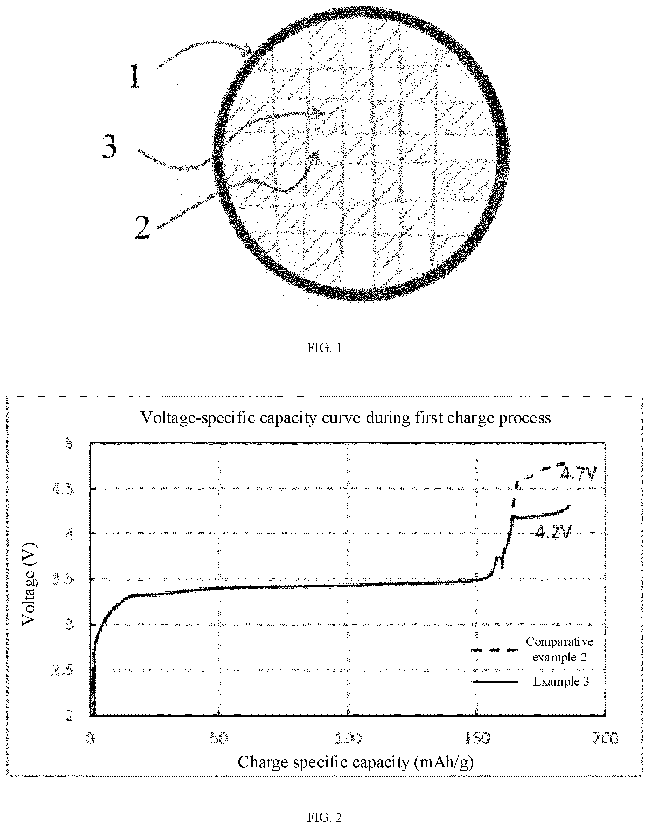

Specifically, this application provides a lithium replenishment composite material. Refer to FIG. 1. The lithium replenishment composite material provided in application includes a core and a coating layer 1 containing a conductive material that is disposed outside the core and that at least partially coats the core, where a material of the core includes a lithium replenishment agent 2 and a metal catalyst 3, and the lithium replenishment agent 2 includes an organic lithium replenishment agent. The lithium replenishment composite material provided by this application has the following beneficial effects.

The material of the core includes an organic lithium replenishment agent and a metal catalyst. The organic lithium replenishment agent provides a lithium source for lithium replenishment. During the first charge cycle of a battery, the organic lithium replenishment agent releases lithium ions to replenish lithium for the negative electrode, while the remaining components simultaneously convert into gases and are expelled from the battery. This leaves no residue after lithium replenishment, thereby not affecting a mass energy density or subsequent performance of the battery. The metal catalyst can lower the decomposition potential of the organic lithium replenishment agent, enabling the organic lithium replenishment agent to deliver a greater capacity at a lower potential. This achieves effective lithium replenishment while avoiding irreversible damage to the positive electrode active material structure and electrolyte at a high potential. The coating layer of a conductive material, which at least partially coats the core from the outside, can suppress the dissolution of metal from the metal catalyst while enhancing the electrical conductivity of the lithium replenishment composite material, thereby improving both the lithium replenishment capacity and prolonging the lifespan of the battery. In the lithium replenishment composite material provided in this application, because of the coating layer containing a conductive material and the core disposed within the coating layer containing a conductive material, the lithium replenishment composite material exhibits excellent lithium replenishment performance and can optimize the cycling performance of the battery.

It can be understood that, in the lithium replenishment composite material provided by this application, the coating layer containing a conductive material can completely coat the core, to form a core-shell structure, or partially coat the core. Both scenarios are within the protection scope of this application. In these embodiments of this application, the coating layer containing a conductive material completely coats the core, to form a core-shell structure, which is more conducive to suppressing metal dissolution from the metal catalyst and enhancing the electrical conductivity of the lithium replenishment composite material.

Additionally, the metal catalyst in this application refers to a catalyst containing a metal element, including an elemental metal, a metal compound, and an alloy of multiple metals. All are within the protection scope of this application.

Refer to FIG. 1. In some embodiments, it can be learned from the figure that in a core, a lithium replenishment agent 2 and a metal catalyst 3 are uniformly mixed. This facilitates further utilization of the catalyst, lowering a decomposition potential of the organic lithium replenishment agent, thereby enabling the organic lithium replenishment agent to deliver a greater capacity at a lower potential. This achieves effective lithium replenishment while avoiding irreversible damage to the positive electrode active material structure and electrolyte at a high potential.

In some embodiments, the organic lithium replenishment agent includes at least one of $Li_2C_2O_4$, $Li_2C_4O_4$, $Li_2C_3O_5$, $Li_2C_4O_6$, and $(Li_2C_2O_2N_2)_n$. These organic lithium replenishment agents all have relatively high decomposition potentials. During the first charge cycle of the battery, the agents release lithium ions to replenish lithium for a negative electrode, while the remaining components simultaneously generate gases such as carbon monoxide, carbon dioxide, nitrogen, or nitrogen oxides, and are expelled from the battery. This leaves no residue after lithium replenishment, thereby not affecting a mass energy density or subsequent performance of the battery.

It can be understood that a simplified structural formula of $(Li_2C_2O_2N_2)_n$ is $[COCON(Li)N(Li)]_n$. A preparation method thereof is as follows. First, oxalyl dihydrazide $([CONHNH_2]_2)$ and oxalyl chloride are added to a dry acetonitrile suspension, with pyridine as a proton scavenger, to obtain a light-yellow polymer $[COCONHNH]_n$ through polycondensation. Then, this polymer is added to a methoxy lithium solution in anhydrous DMF, stirred, centrifuged, and washed twice with anhydrous ethanol to obtain bright yellow $[COCON(Li)N(Li)]_n$ that releases lithium ions to replenish lithium for the negative electrode, while the remaining components simultaneously generate gases such as $N_2$, $CO_2$, and CO.

In some embodiments, the metal catalyst includes at least one of a transition metal oxide, a transition metal nitride, and a transition metal carbide. Transition metals possess incompletely filled valence d-orbitals, resulting in easily deformable electron clouds. Based on the 18-electron rule, a property differs significantly from that of other elements. Due to empty d-orbitals, transition metals readily form coordination complexes. These metal elements utilize hybridized orbitals to accept electrons and achieve stable 16-electron or 18-electron configurations, and therefore can be used as metal catalysts. Therefore, using at least one of a transition metal oxide, transition metal nitride, or transition metal carbide as the metal catalyst leads to excellent catalytic performance.

In some embodiments, the transition metal includes at least one of Ti, V, Mn, Fe, Co, Ni, Cu, Zn, Nb, Mo, In, W, Zr, Ta, and W. General formulas of the transition metal oxide, transition metal nitride, and transition metal carbide are $M_xO_y$, $M_xN_y$, and $M_xC_y$, respectively, where M is one or more of the transition metals Ti, V, Mn, Fe, Co, Ni, Cu, Zn, Nb, Mo, In, W, Zr, Ta, and W, $0<x\leq3$, and $0<y\leq5$. Using at least one of the aforementioned transition metals can lower a decomposition potential of the organic lithium replenishment agent, enabling the organic lithium replenishment agent to deliver a greater capacity at a lower potential. This achieves effective lithium replenishment while avoiding irreversible damage to the positive electrode active material structure and electrolyte at a high potential.

In some embodiments, the material of the coating layer containing a conductive material includes at least one of an organic conductive polymer and conductive carbon. The coating layer containing a conductive material being made of the aforementioned substances can reduce the dissolution of transition metals and enhance the overall electrical conductivity of the material, thereby improving both the lithium replenishment capacity and prolonging a lifespan of the battery.

In some embodiments, a material of the coating layer containing a conductive material includes an organic conductive polymer, where the organic conductive polymer includes at least one of polyaniline, polypyrrole, and polythiophene. Polyaniline is a type of conductive polymer material obtained through chemical oxidative polymerization or electrochemical polymerization of aniline monomers. After doping, polyaniline exhibits conductivity and possesses a photoelectric conversion property and a nonlinear optical property. The electrical activity of polyaniline is based on the $\pi$-electron conjugated structure in a molecular chain. As the $\pi$-electron system in the molecular chain expands, the $\pi$-bonding state and $\pi^*$-antibonding state form the valence band and conduction band, respectively. This delocalized $\pi$-electron conjugated structure, upon doping, can form p-type and n-type conductive states. Unlike other conductive polymers that generate cation vacancies under the action of oxidants during doping, the number of electrons does not change during the doping of polyaniline. Instead, the doped protonic acid decomposes to produce $H^+$ and counter anions (such as $Cl^-$, sulfate, and phosphate) entering the main chain and combining with N atoms in amine and imine groups, forming polarons and bipolarons that delocalize into the $\pi$-bonds of the entire molecular chain, thereby giving polyaniline high conductivity. Polyaniline features high charge storage capacity, good stability against oxygen and water, excellent electrochemical performance, low density, reversible oxidation-reduction characteristics, and the like. In composite electrodes, polyaniline can serve as both a conductive matrix and an active material. Polypyrrole is a common conductive polymer with high electrical conductivity, good environmental stability, reversible electrochemical oxidation-reduction characteristic, and strong charge storage capacity, and is an ideal electrode material for polymer secondary batteries. Polythiophene is a common conductive polymer, and polythiophene obtained through electrochemical polymerization in a boron trifluoride diethyl etherate complex exhibits strength greater than that of metallic aluminum. Using at least one of the aforementioned organic conductive polymers further reduces metal dissolution and enhances electrical conductivity.

In some embodiments, the material of the coating layer containing a conductive material includes conductive carbon, where the conductive carbon includes at least one of graphene, carbon nanotubes, acetylene black, Super P, Ketjen black, or organic-derived carbon. Graphene (graphene) is a novel material that includes carbon atoms connected via $sp^2$ hybridization and that is tightly packed into a single-layer two-dimensional honeycomb lattice structure. Graphene exhibits excellent optical, electrical, and mechanical properties, holding significant application prospects in materials science, micro-nano processing, energy, biomedicine, and drug delivery, and is considered a revolutionary material for the future. Carbon nanotubes, as a one-dimensional nanomaterial, are lightweight with a perfect hexagonal structure, possessing exceptional mechanical, electrical, and chemical properties. Acetylene black is carbon black produced through continuous pyrolysis of acetylene with purity over 99%. The acetylene is derived from byproduct gas that is generated during calcium carbide production or naphtha (crude gasoline) pyrolysis and that undergoes decomposition and purification processes. Compared with furnace black, acetylene black exhibits more developed crystalline and secondary structures, resulting in superior electrical conductivity and liquid absorption properties. Additionally, it contains fewer impurities such as heavy metal and demonstrates lower self-discharge losses. Super P (SP) is a conductive carbon black prepared via the furnace method (MMM method), consisting of primary particles (primary structure) approximately 40 nm in diameter that aggregate into a primary aggregate (secondary structure) of 150 nm to 200 nm that is further processed through soft aggregation and artificial compression, forming a grape-like chain structure. In lithium-ion batteries, SP primarily functions by dispersing 150 nm to 200 nm primary aggregates around active materials to form a multi-branched conductive network, thereby reducing the physical internal resistance of the battery and enhancing electron conductivity. Ketjen carbon black (Ketjen black) is a carbon black produced through a highly original specialized process. Compared with ordinary conductive carbon black, Ketjen black requires only a minimal addition to achieve high conductivity, and therefore Ketjen black is a premium conductive carbon black. Using at least one of the aforementioned conductive carbons further reduces metal dissolution and enhances electrical conductivity.

In some embodiments, the $D_v50$ particle size of the lithium replenishment composite material is 2 $\mu$m to 30 $\mu$m, for example, may be 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 12 $\mu$m, 14 $\mu$m, 15 $\mu$m, 17 $\mu$m, 19 $\mu$m, 20 $\mu$m, 22 $\mu$m, 24 $\mu$m, 25 $\mu$m, 27 $\mu$m, 29 $\mu$m, 30 $\mu$m, or the like. If the $D_v50$ particle size of the lithium replenishment composite material is excessively small, slurry agglomeration and gelation, increased viscosity, and reduced solid content may occur. If the particle size is excessively large, polarization of the lithium ion release reaction increases in the lithium replenishment agent, thereby reducing lithium replenishment efficiency. The aforementioned particle size helps fully realize lithium replenishment performance and optimizes the cycling performance of the battery. The $D_v50$ particle size of the metal catalyst is 0.1 $\mu$m to 10 $\mu$m, for example, may be 0.1 $\mu$m, 0.5 $\mu$m, 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, or the like. If the particle size is excessively small, synthesis becomes difficult, hindering industrialization, and may lead to reduced stability of the catalytic material. If the particle size is excessively large, it weakens the catalytic activity of the metal catalyst. A thickness of the coating layer containing a conductive material is 2 nm to 100 nm, for example, may be 2 nm, 5 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, or the like. The thickness of the coating layer containing a conductive material directly affects coating performance. If the coating layer containing a conductive material of the composite lithium replenishment agent shell is excessively thin, metal ion dissolution cannot be effectively suppressed or a good conductive network cannot be provided. If the coating layer containing a conductive material is excessively thick, lithium ion transmission is hindered and the lithium replenishment component is reduced, thereby affecting a lithium replenishment capacity. The aforementioned thickness can effectively inhibit metal dissolution and enhance the electrical conductivity of the lithium replenishment composite material.

In some embodiments, the $D_v50$ particle size of the lithium replenishment composite material is 5 $\mu$m to 10 $\mu$m, for example, 5 $\mu$m, 6 $\mu$m, 7 $\mu$m, 8 $\mu$m, 9 $\mu$m, 10 $\mu$m, or the like. This particle size further facilitates fully realizing lithium replenishment performance and optimizing the cycling performance of the battery. The $D_v50$ particle size of the metal catalyst is 0.5 $\mu$m to 5 $\mu$m, for example, 0.5 $\mu$m, 0.8 $\mu$m, 1 $\mu$m, 2 $\mu$m, 3 $\mu$m, 4 $\mu$m, 5 $\mu$m, or the like. If the particle size is excessively small, synthesis becomes difficult, hindering industrialization, and may lead to reduced stability of the catalytic material. If the particle size is excessively large, the catalytic activity of the metal catalyst is weakened. The thickness of the coating layer containing a conductive material is 5 nm to 50 nm, for example, may be 5 nm, 10 nm, 15 nm, 20 nm, 25 nm, 30 nm, 35 nm, 40 nm, 45 nm, 50 nm, or the like. This thickness inhibits metal dissolution and enhances the electrical conductivity of the lithium replenishment composite material.

In some embodiments, a decomposition voltage of the lithium replenishment composite material is 4.12 V to 4.35 V, for example, may be 4.12 V, 4.15 V, 4.18 V, 4.2 V, 4.23 V, 4.25 V, 4.27 V, 4.3 V, 4.31 V, 4.35 V, or the like. The lithium composite material has a relatively low decomposition voltage, enabling the organic lithium replenishment agent to deliver a greater capacity at a lower potential. This achieves effective lithium replenishment while avoiding irreversible damage to the positive electrode active material structure and electrolyte at a high potential.

In some embodiments, a mass ratio of the metal catalyst to the lithium replenishment agent is (1 to 30):100, for example, may be 1:100, 5:100, 10:100, 15:100, 20:100, 25:100, 30:100, or the like. If a proportion of the metal catalyst in the composite lithium replenishment agent is excessively low, it cannot adequately catalyze the lithium release of the lithium replenishment agent. If the proportion is excessively high, the lithium replenishment component is reduced, affecting a lithium replenishment capacity. At the aforementioned ratio, the proportion is appropriate.

In some embodiments, the mass ratio of the metal catalyst to the lithium replenishment agent is (5 to 10): 100, for example, may be 5:100, 6:100, 7:100, 8:100, 9:100, 10:100, or the like. This ratio facilitates adequate catalysis of the lithium release of the lithium replenishment agent and provides a higher lithium replenishment capacity.

A preparation method of the lithium replenishment composite material is not limited in this application. Uniform compounding of the lithium replenishment agent with the transition metal catalyst is a prerequisite for fully realizing the catalytic effect of the transition metal catalyst. Physical mixing methods, such as grinding, sand milling, and ball milling, are simple to operate and can achieve relatively uniform compounding of the lithium replenishment agent and the transition metal catalyst while reducing material particle size. However, effectiveness of these method is limited, and particle size control is challenging. In contrast, synthesizing the composite lithium replenishment agent through recrystallization, which is an in-situ method, allows thorough and uniform mixing of the lithium replenishment agent and the metal catalyst and enables control over the particle size of the composite material.

According to a second aspect, this application provides a preparation method of the lithium replenishment composite material described in the aforementioned embodiments, including the following steps:

dissolving an organic lithium replenishment agent in a solvent to form a solution, and adding a metal catalyst to the solution to obtain a suspension,
recrystallizing the suspension to obtain a core; and
preparing a coating layer containing a conductive material outside the core, to obtain the lithium replenishment composite material.

According to the preparation method of the lithium replenishment composite material provided by this application, the lithium replenishment composite material is synthesized through recrystallization, which is an in-situ method. This allows thorough and uniform mixing of the lithium replenishment agent and the metal catalyst. In addition, it enables control over a particle size of the lithium replenishment composite material.

Persons skilled in the art can understand that in the above method of specific embodiments, the order of the steps does not imply a strict execution sequence or impose any limitations on the implementation process. The specific execution sequence of each step should be determined based on its function and possible inherent logic. Additionally, other steps may be performed between the steps.

The preparation method of the lithium replenishment composite material provided by this application possesses all the beneficial effects of the aforementioned lithium replenishment composite material. Details are not described herein.

According to a third aspect, this application provides a positive electrode plate, including the lithium replenishment composite material described in the aforementioned embodiments or the lithium replenishment composite material obtained according to the preparation method described in the aforementioned embodiments.

In some embodiments, the positive electrode plate includes a positive electrode material, where the positive electrode material includes the lithium replenishment composite material. The lithium replenishment composite material in the aforementioned embodiments directly used with the positive electrode material for coating, ensuring good compatibility with existing processes and high safety.

In some embodiments, the positive electrode material further includes a positive electrode active material, where a mass percentage of the lithium replenishment composite material in the positive electrode material is 0.5% to 20%, for example, may be 0.5%, 1%, 3%, 5%, 10%, 15%, 18%, 20%, or the like. The proportion of the lithium replenishment composite material in the positive electrode material affects a lifespan and an energy density of a battery. When the proportion of the lithium replenishment composite material is excessively low, an amount of lithium ions replenished during the first charge cycle is insufficient to compensate the consumption of active lithium ions during long-term cycling of the battery, failing to achieve long lifespan. When the proportion of the lithium replenishment material is excessively high, the proportion of active material available for subsequent reversible cycling decreases, thereby affecting the energy density of the battery. Therefore, an appropriate proportion of the lithium replenishment agent is crucial for balancing the lifespan and energy density of the battery. At the aforementioned proportion, the consumption of active lithium ions during long-term cycling of the battery can be compensated without affecting the energy density of the battery.

In some embodiments, a mass percentage of the lithium replenishment composite material in the positive electrode material is 1% to 10%, for example, 1%, 2%, 3%, 4%, 5%, 6%, 7%, 8%, 9%, 10%, or the like. This proportion provides better lithium replenishment and improves the energy density of the battery.

The positive electrode plate includes a positive electrode current collector and a positive electrode film layer disposed on at least one surface of the positive electrode current collector, where the positive electrode film layer includes the binder in the first aspect of this application.

As an example, the positive electrode current collector has two opposite surfaces in a thickness direction of the positive electrode current collector, and the positive electrode film layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material substrate and a metal layer formed on at least one surface of the polymer material substrate. The composite current collector may be formed by forming a metal material (such as aluminum, aluminum alloy, nickel, nickel alloy, titanium, titanium alloy, silver, or silver alloy) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material known in the art for use in batteries. For example, the positive electrode active material may include at least one of the following materials: olivine-structured lithium-containing phosphate, lithium transition metal oxide, and their respective modified compounds. However, this application is not limited to these materials, and other conventional materials that can be used as positive electrode active materials for batteries may alternatively be used. These positive electrode active materials may be used alone or in combination of two or more. Examples of lithium transition metal oxides may include, but are not limited to, at least one of lithium cobalt oxide (such as $LiCoO_2$), lithium nickel oxide (such as $LiNiO_2$), lithium manganese oxide (such as $LiMnO_2$ or $LiMn_2O_4$), lithium nickel cobalt oxide, lithium manganese cobalt oxide, lithium nickel manganese oxide, lithium nickel cobalt manganese oxide (such as $LiNi_{1/3}Co_{1/3}Mn_{1/3}O_2$ (also abbreviated as NCM$_{333}$), $LiNi_{0.5}Co_{0.3}Mn_{0.2}O_2$ (also abbreviated as NCM$_{523}$), $LiNi_{0.5}Co_{0.25}Mn_{0.25}O_2$ (also abbreviated as NCM$_{211}$), $LiNi_{0.6}Co_{0.2}Mn_{0.2}O_2$ (also abbreviated as NCM$_{622}$), or $LiNi_{0.8}Co_{0.1}Mn_{0.1}O_2$ (also abbreviated as NCM$_{811}$)), lithium nickel cobalt aluminum oxide (such as $LiNi_{0.85}Co_{0.15}Al_{0.05}O_2$), and their modified compounds. Examples of olivine-structured lithium-containing phosphates may include, but are not limited to, at least one of lithium iron phosphate (such as $LiFePO_4$ (also abbreviated as LFP)), a composite material of lithium iron phosphate and carbon, lithium manganese phosphate (such as $LiMnPO_4$), a composite material of lithium manganese phosphate and carbon, lithium manganese iron phosphate, or a composite material of lithium manganese iron phosphate and carbon.

In some embodiments, the positive electrode plate may be prepared as follows. The components for preparing the positive electrode plate, such as the positive electrode active material, a conductive agent, the binder in the first aspect of this application, and any other components, are dispersed in a solvent (such as N-methylpyrrolidone) to form a positive electrode slurry. The positive electrode slurry is applied to the positive electrode current collector, followed by drying, cold pressing, and other processes, to obtain the positive electrode plate.

The positive electrode plate provided by this application includes the lithium replenishment composite material in the aforementioned embodiments and possesses all the beneficial effects of the aforementioned lithium replenishment composite material. Details are not des here.

According to a fourth aspect, this application provides a separator, including the lithium replenishment composite material in the aforementioned embodiments or the lithium replenishment composite material obtained according to the preparation method described in the aforementioned embodiments.

Specifically, the separator includes a base film and a coating layer applied on the base film. The coating layer may further include a glue layer, a ceramic layer, and the like. The lithium replenishment composite material is applied on a side of the separator clear to the positive electrode plate. This also helps lithium replenishment.

The separator provided by this application includes the lithium replenishment composite material of the aforementioned embodiments and possesses all the beneficial effects of the aforementioned lithium replenishment composite material. Details are not described herein.

According to a fifth aspect, this application provides a secondary battery, including the positive electrode plate described in the aforementioned embodiments or the separator described in the aforementioned embodiments.

Typically, a battery cell includes a positive electrode plate, a negative electrode plate, an electrolyte, and a separator. During the charge and discharge of the battery, active ions intercalate and deintercalate back and forth between the positive electrode plate and the negative electrode plate. The electrolyte conducts ions between the positive electrode plate and the negative electrode plate. The separator is disposed between the positive electrode plate and the negative electrode plate, primarily to prevent short circuits between the positive electrode and negative electrode while allowing ions to pass through.

The preparation of the battery cell may be carried out according to methods commonly used in the art. For example, the positive electrode plate, negative electrode plate, and separator may be formed into an electrode assembly through winding or lamination. Then, an electrolyte is injected into the electrode assembly, followed by sealing to obtain the battery cell.

The electrolyte conducts ions between the positive electrode plate and the negative electrode plate. The electrolyte is not specifically limited to any particular type in this application and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalate)borate, lithium bis(oxalate)borate, lithium difluorobis(oxalate)phosphate, or lithium tetrafluoro(oxalate)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte further optionally includes an additive. For example, the additive may include a negative electrode film-forming additive, a positive electrode film-forming additive, and additives that improve certain battery performance, such as an additive that improves overcharge performance, an additive that improves high-temperature or low-temperature performance, and the like.

In some embodiments, the positive electrode plate, negative electrode plate, and separator may be formed into an electrode assembly through winding or lamination.

In some embodiments, the battery cell may include an outer packaging. The outer packaging may be used to encapsulate the aforementioned electrode assembly and electrolyte.

In some embodiments, the outer packaging of the battery cell may be a hard shell, such as a hard plastic shell, an aluminum shell, or a steel shell. The outer packaging of the battery cell may alternatively be a soft package, such as a soft pouch. A material of the soft package may be plastic, such as polypropylene, polybutylene terephthalate, or polybutylene succinate.

A shape of the battery cell is not specifically limited in this application and may be cylindrical, rectangular, or any other shape.

A specific form of the battery may be a battery module or a battery pack. One or more battery cells may be contained in a battery module. A specific quantity may be determined by persons skilled in the art based on the application and a capacity of the battery module.

A battery module is formed by electrically connecting a certain quantity of secondary batteries together and placing them in a frame to protect the battery cells from external impacts, heat, vibrations, and the like. Commonly used battery modules generally include two end plates, with multiple battery cells (lithium-ion batteries) arranged between the two end plates. The end plate with a battery module output electrode is also known as an output electrode end plate, while an end plate without a battery module output electrode is known as the non-output electrode end plate.

In some battery production and processing technologies, multiple battery cells are first integrated into a battery module, and then the battery module is encapsulated in a battery casing to form a battery pack. Multiple battery modules can be arranged in a single row or multiple rows in the battery pack. Multiple rows of battery modules may be in double rows and multiple columns, multiple rows and double columns, multiple rows and multiple columns, and the like. For example, battery modules are encapsulated in double rows and multiple columns in the battery pack; a first end plate of each column is generally a head output electrode end plate; two adjacent end plates between two rows of battery modules are middle non-output electrode end plates; a last end plate of each column is a tail non-output electrode end plate; the head output electrode end plate and one of the middle non-output electrode end plates belong to a first row of battery modules; and one of the middle non-output electrode end plates and the tail output electrode end plate belong to a second row of battery modules.

The secondary battery provided by this application includes the lithium replenishment composite material of the aforementioned embodiments and possesses all the beneficial effects of the aforementioned lithium replenishment composite material. Details are not described herein.

According to a sixth aspect, this application provides an electrical device, including the secondary battery described in the aforementioned embodiments.

The electrical device provided by this application includes, but is not limited to, mobile phones, portable devices, notebook computers, electric bicycles, electric vehicles, ships, spacecraft, electric toys, electric tools, and the like. For example, spacecraft includes airplanes, rockets, space shuttles, and spaceships; electric toys include fixed or mobile electric toys, such as game consoles, electric vehicle toys, electric ship toys, electric airplane toys, and the like; electric tools include electric metal cutting tools, electric grinding tools, electric assembly tools, and electric railway tools, such as electric drills, electric grinders, electric wrenches, electric screwdrivers, electric hammers, electric impact drills, concrete vibrators, electric planers, and the like.

The electrical device provided by this application includes the lithium replenishment composite material of the aforementioned embodiments and possesses all the beneficial effects of the aforementioned lithium replenishment composite material. Details are not described herein.

The technical solutions of the present invention are further described in detail below with reference to specific embodiments and drawings. It should be understood that the following embodiments are merely used to explain the present invention and are not intended to limit the present invention.

The parameter settings of the lithium replenishment composite materials in the examples and comparative examples are shown in Table 1 below.

**Table 1 Parameter settings of lithium replenishment composite materials in examples and comparative examples**

| | Metal catalyst | Mass percentage of lithium replenishment composite material | Mass ratio of metal catalyst to lithium replenishment agent | Lithium replenishment agent | Coating layer containing conductive material | $D_v50$ particle size of lithium replenishment composite material ($\mu$m) | $D_v50$ particle size of metal catalyst ($\mu$m) | Thickness of coating layer containing conductive material (nm) |
|---|---|---|---|---|---|---|---|---|
| Example 1 | Cobalt nitride | 0.01 | 0.07 | Li2C2O4 | Organic-derived carbon | 10 | 5 | 50 |
| Example 2 | Cobalt nitride | 0.03 | 0.07 | Li2C2O4 | Organic-derived carbon | 10 | 5 | 50 |
| Example 3 | Cobalt nitride | 0.05 | 0.07 | Li2C2O4 | Organic-derived carbon | 10 | 5 | 50 |
| Example 4 | Cobalt nitride | 0.10 | 0.07 | Li2C2O4 | Organic-derived carbon | 10 | 5 | 50 |
| Example 5 | Cobalt nitride | 0.05 | 0.02 | Li2C2O4 | Organic-derived carbon | 10 | 5 | 50 |
| Example 6 | Cobalt nitride | 0.05 | 0.10 | Li2C2O4 | Organic-derived carbon | 10 | 5 | 50 |
| Example 7 | Cobalt nitride | 0.05 | 0.20 | Li2C2O4 | Organic-derived carbon | 10 | 5 | 50 |
| Example 8 | Cobalt nitride | 0.20 | 0.07 | Li2C2O4 | Organic-derived carbon | 10 | 5 | 50 |
| Example 9 | Cobalt nitride | 0.05 | 0.30 | Li2C2O4 | Organic-derived carbon | 10 | 5 | 50 |
| Example 10 | Cobalt nitride | 0.05 | 0.05 | Li2C2O4 | Organic-derived carbon | 10 | 5 | 50 |
| Example 11 | Cobalt oxide | 0.05 | 0.07 | Li2C2O4 | Organic-derived carbon | 10 | 5 | 50 |
| Example 12 | Molybdenum carbide | 0.05 | 0.07 | Li2C2O4 | Organic-derived carbon | 10 | 5 | 50 |
| Example 13 | Iron nitride | 0.05 | 0.07 | Li2C2O4 | Organic-derived carbon | 10 | 5 | 50 |

| | Metal catalyst | Mass percentage of lithium replenishment composite material | Mass ratio of metal catalyst to lithium replenishment agent | Lithium replenishment agent | Coating layer containing conductive material | $D_v50$ particle size of lithium replenishment composite material ($\mu$m) | $D_v50$ particle size of metal catalyst ($\mu$m) | Thickness of coating layer containing conductive material (nm) |
|---|---|---|---|---|---|---|---|---|
| Example 14 | Cobalt nitride | 0.05 | 0.07 | Li2C2O4 | Polyaniline | 10 | 5 | 50 |
| Example 15 | Cobalt nitride | 0.05 | 0.07 | Li2C2O4 | Graphene | 10 | 5 | 50 |
| Example 16 | Cobalt nitride | 0.05 | 0.07 | Li2C2O4 | Organic-derived carbon | 2 | 1 | 50 |
| Example 17 | Cobalt nitride | 0.05 | 0.07 | Li2C2O4 | Organic-derived carbon | 30 | 5 | 50 |
| Example 18 | Cobalt nitride | 0.05 | 0.07 | Li2C2O4 | Organic-derived carbon | 10 | 0.1 | 50 |
| Example 19 | Cobalt nitride | 0.05 | 0.07 | Li2C2O4 | Organic-derived carbon | 15 | 9.5 | 50 |
| Example 20 | Cobalt nitride | 0.05 | 0.07 | Li2C2O4 | Organic-derived carbon | 10 | 5 | 2 |
| Example 21 | Cobalt nitride | 0.05 | 0.07 | Li2C2O4 | Organic-derived carbon | 10 | 5 | 100 |
| Comparative example 1 | - | - | - | - | Organic-derived carbon | 10 | 5 | 50 |
| Comparative example 2 | - | 0.05 | 0 | Li2C2O4 | Organic-derived carbon | 10 | - | 50 |
| Comparative example 3 | Cobalt nitride | 0.05 | 0.07 | Li2C2O4 | - | 10 | 5 | - |

EP 4 641 700 A1

[Compounding of lithium replenishment agent and metal catalyst]

For example, in Example 3, at 25°C, 10 g by mass of lithium oxalate ($Li_2C_2O_4$) was dissolved in 100 g by mass of deionized water; 0.7 g by mass of cobalt nitride was then added with an average particle size D50 of 2 $\mu$m, and underwent ultrasonic dispersion for 1 h to obtain a lithium oxalate suspension containing cobalt nitride, which was denoted as solution A; the above solution A was slowly added dropwise to 120 g by mass of anhydrous ethanol and was stirred at 500 rpm; and after all of solution A was added, the solution was stirred for 30 min, let standing for 1 h, filtered to collect solid phase components, and dried at 80°C in a vacuum oven for 12 h, to obtain a lithium replenishment material compounded of lithium oxalate and cobalt nitride.

[Coating of conductive layer]

The lithium replenishment material compounded of lithium oxalate and cobalt nitride obtained above was mixed uniformly with 5 g of polyvinyl alcohol, placed in a tubular furnace, and calcined at 400°C under an argon atmosphere for 2 h, to obtain a composite lithium replenishment material with a core of lithium oxalate/cobalt nitride composite material and a shell of a carbon layer.

[Preparation of positive electrode plate]

The composite lithium replenishment material with a core-shell structure obtained above was mixed with a lithium iron phosphate material, conductive agent carbon black, and a binder polyvinylidene fluoride (PVDF) at a weight ratio of 5:92:1:2, and thoroughly stirred and mixed in an N-methylpyrrolidone (NMP) solvent system to obtain a positive electrode slurry; and the positive electrode slurry was uniformly applied to a positive electrode current collector, followed by drying, cold pressing, and slitting to obtain the positive electrode plate.

[Preparation of negative electrode plate]

An active material artificial graphite, a conductive agent carbon black, a binder styrene-butadiene rubber (SBR), and a thickener sodium carboxymethyl cellulose (CMC) were dissolved in deionized water at a weight ratio of 96.2:0.8:0.8:1.2, and mixed uniformly to prepare a negative electrode slurry; and the negative electrode slurry was uniformly applied to a negative electrode current collector copper foil one or more times, followed by drying, cold pressing, and slitting to obtain the negative electrode plate.

[Preparation of electrolyte]

In an argon atmosphere glovebox ($H_2O$<0.1 ppm and $O_2$<0.1 ppm), the organic solvents ethylene carbonate (EC) and ethyl methyl carbonate (EMC) were mixed at a volume ratio of 3:7 uniformly, and 12.5% $LiPF_6$ lithium salt was dissolved in the organic solvent and stirred uniformly to obtain the electrolyte of Example 3.

[Separator]

A polypropylene film was used as a separator.

[Preparation of lithium-ion battery]

The positive electrode plate, separator, and negative electrode plate in Example 3 were stacked in order, with the separator positioned between the positive electrode plate and negative electrode plate to provide isolation, and then wound to obtain a bare cell; tabs were welded to the bare cell; the bare cell was placed into an aluminum shell, and baked at 80°C to remove water; then the electrolyte was injected; sealing was performed to obtain an uncharged battery. The uncharged battery underwent processes such as standing, hot and cold pressing, formation, shaping, and capacity testing to obtain the lithium-ion battery product in Example 3.

The lithium-ion battery products of the comparative examples and other examples were prepared according to the above steps, with the only difference being the corresponding parameters.

Additionally, in examples where the material of the coating layer containing a conductive material was not organic-derived carbon, high-temperature calcination in a tubular furnace was not required; and the material was directly mixed and ground.

In Comparative example 1, no lithium replenishment agent was used. In Comparative example 2, no metal catalyst was used. In Comparative example 3, no coating layer containing a conductive material was used.

[Battery performance test]

1. Battery capacity retention rate test

Example 3 was used as an example, and the battery capacity retention rate test process was as follows. At 60°C, the battery undergoing formation corresponding to Example 3 was charged at a constant current of 1/3C to 3.65 V, then charged at a constant voltage of 3.65 V until 0.05C, left standing for 5 min, and discharged at 1/3C to a discharge cutoff voltage, with an obtained capacity denoted as an initial capacity C0. The above steps were repeated on the same battery. A discharge capacity Cn of the battery at the $n^{th}$ cycle was recorded, and then the capacity retention rate of each cycle Pn=Cn/C0×100%. In this test, the first cycle corresponds to n=1, the second cycle corresponds to n=2, ..., and the $100^{th}$ cycle corresponds to n=100. The battery capacity retention rate data corresponding to Example 3 in Table 1 was measured after 100 cycles under the above test conditions, that is, the value of P100. The test processes for Comparative example 1 and other examples were the same.

2. Battery volumetric energy density test

The internal dimensions of the battery housing were measured, that is, length a, width b, and height c. Each battery was charged at 1C rate to a voltage of 3.65 V, and then discharged at 1C rate to a voltage of 2.5 V for measuring discharge energy E0, where

$$\text{battery volumetric energy density} = E0/(a \times b \times c)$$

3. First-charge specific capacity test

Example 3 was used as an example. Before assembling the battery, a mass of the positive electrode plate was weighed and a total mass m of lithium iron phosphate and the composite lithium replenishment agent was calculated. The assembled battery was charged to 4.5 V for the first time under appropriate charge conditions, with an obtained charge capacity denoted as Q, where

$$\text{first-charge specific capacity of battery} = Q/m.$$

4. Lithium replenishment agent decomposition voltage test

After the first charge cycle of the battery, the voltage (V) and capacity (Q) data during the charging process were recorded, and dQ/dV was plotted against V. A potential corresponding to an oxidation peak was recorded, where the peak potential greater than 3.65 V was the decomposition voltage of the lithium replenishment agent.
The measurement results were shown in Table 2 below.

**Table 2 Performance measurement of lithium replenishment composite materials in examples and comparative examples**

| | Energy density (Wh/L) | Decomposition voltage of lithium replenishment composite material (V) | First-charge specific capacity (mAh/g) | Capacity retention rate at $100^{th}$ cycle at 60°C |
|---|---|---|---|---|
| Example 1 | 182 | 4.2 V | 164.4 | 96.1% |
| Example 2 | 186 | 4.2 V | 171.2 | 96.9% |
| Example 3 | 176 | 4.2 V | 178.5 | 98.1% |
| Example 4 | 167 | 4.25 V | 195.1 | 99.2% |
| Example 5 | 174 | 4.35 V | 177.6 | 97.5% |
| Example 6 | 175 | 4.16 V | 178.1 | 97.8% |
| Example 7 | 174 | 4.13 V | 178.2 | 97.1% |
| Example 8 | 158 | 4.21 | 205.3 | 99.6% |
| Example 9 | 172 | 4.12 | 177.5 | 95.6% |

(continued)

|  | Energy density (Wh/L) | Decomposition voltage of lithium replenishment composite material (V) | First-charge specific capacity (mAh/g) | Capacity retention rate at 100th cycle at 60°C |
|---|---|---|---|---|
| Example 10 | 176 | 4.22 V | 177.9 | 97.2% |
| Example 11 | 176 | 4.35 V | 178.0 | 98.0% |
| Example 12 | 176 | 4.3 V | 178.2 | 97.6% |
| Example 13 | 175 | 4.4 V | 177.2 | 97.0% |
| Example 14 | 174 | 4.32 V | 176.2 | 96.9% |
| Example 15 | 176 | 4.15 V | 179.5 | 98.2% |
| Example 16 | 170 | 4.18 V | 179.1 | 98.4% |
| Example 17 | 173 | 4.31 V | 177.1 | 97.2% |
| Example 18 | 178 | 4.21 V | 178.2 | 98.5% |
| Example 19 | 174 | 4.25 V | 176.7 | 97.5% |
| Example 20 | 173 | 4.32 V | 175.4 | 96.1% |
| Example 21 | 176 | 4.18 V | 178.1 | 97.8% |
| Comparative example 1 | 180 | / | 161.2 | 93.8% |
| Comparative example 2 | 172 | 4.7 V | 152.3 | 92.6% |
| Comparative example 3 | 172 | 4.4 V | 174.5 | 94.3% |

From Table 2, it can be learned that the lithium replenishment composite materials in the examples of this application outperform those in the comparative examples in terms of energy density, decomposition voltage of the lithium replenishment agent, first-charge specific capacity, and capacity retention rate at 100th cycle at 60°C. This indicates that the coating layer containing a conductive material, the lithium replenishment agent, and the metal catalyst are all indispensable, playing a significant role in lithium replenishment and improving the cycling performance of the battery.

The electronic conductivity of the lithium replenishment composite materials in Example 3 and Comparative example 3 is $7.9 \times 10^{-3}$ s/m and $3.8 \times 10^{-5}$ s/m, respectively. It can be learned that the coating layer containing a conductive material can enhance the electrical conductivity of the lithium replenishment composite material, thereby improving both the lithium replenishment capacity and prolonging a lifespan of the battery.

The batteries of Example 3 and Comparative example 2 are charged on a battery charge/discharge tester, and a voltage-charge specific capacity graph is exported based on measurements, as shown in FIG. 2. It can be learned that the absence of a metal catalyst in the lithium replenishment composite material of Comparative example 2 results in a higher decomposition potential of the organic lithium replenishment agent, whereas the decomposition potential in Example 3 of this application is lower, enabling the organic lithium replenishment agent to deliver a greater capacity at a lower potential. This achieves effective lithium replenishment while avoiding irreversible damage to the positive electrode active material structure and electrolyte at a high potential.

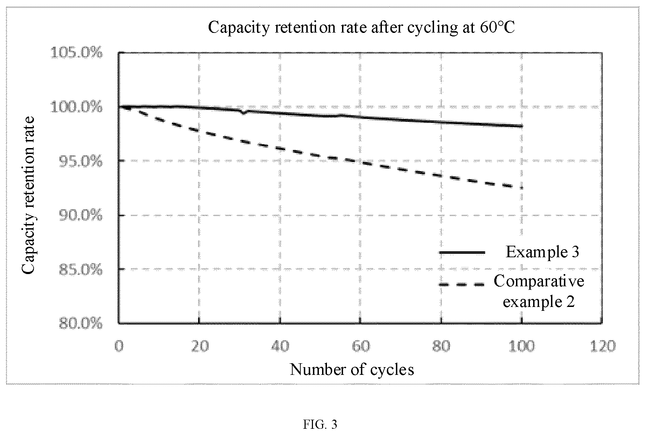

The cycling performance graph of the batteries of Example 3 and Comparative example 2 is shown in FIG. 3. It can be learned that the cycling performance of this application is significantly better than that of Comparative example 2, indicating that the presence of the metal catalyst can also optimize the cycling performance of the battery.

In summary, with the coating layer containing a conductive material and the core disposed within the coating layer containing a conductive material, the lithium replenishment composite material provided by this application exhibits excellent lithium replenishment performance and can enhance the electrical conductivity of the lithium replenishment composite material, thereby improving the lithium replenishment capacity and prolonging the lifespan of the battery, and optimizing the cycling performance of the battery.

The above are only preferred embodiments of the present invention and are not intended to limit the patent scope of the present invention. For persons skilled in the art, various modifications and changes can be made to the present invention. Any modifications, equivalent substitutions, improvements, and the like., made within the spirit and principles of the present invention shall be included within the patent protection scope of the present invention.

**Claims**

1. A lithium replenishment composite material, **characterized by** comprising a core and a coating layer containing a conductive material that is disposed outside the core and that at least partially coats the core, wherein a material of the core comprises a lithium replenishment agent and a metal catalyst, and the lithium replenishment agent comprises an organic lithium replenishment agent.

2. The lithium replenishment composite material according to claim 1, **characterized in that** the organic lithium replenishment agent comprises at least one of $Li_2C_2O_4$, $Li_2C_4O_4$, $Li_2C_3O_5$, $Li_2C_4O_6$, and $(Li_2C_2O_2N_2)_n$; and/or

   the metal catalyst comprises at least one of a transition metal oxide, a transition metal nitride, and a transition metal carbide; and/or
   a material of the coating layer containing a conductive material comprises at least one of an organic conductive polymer and conductive carbon.

3. The lithium replenishment composite material according to claim 1, **characterized in that** the metal catalyst comprises at least one of a transition metal oxide, a transition metal nitride, and a transition metal carbide, and the transition metal comprises at least one of Ti, V, Mn, Fe, Co, Ni, Cu, Zn, Nb, Mo, In, W, Zr, Ta, and W; and/or

   a material of the coating layer containing a conductive material comprises an organic conductive polymer, wherein the organic conductive polymer comprises at least one of polyaniline, polypyrrole, and polythiophene; and/or
   the material of the coating layer containing a conductive material comprises conductive carbon, wherein the conductive carbon comprises at least one of graphene, carbon nanotubes, acetylene black, Super P, Ketjen black, and organic-derived carbon.

4. The lithium replenishment composite material according to any one of claims 1 to 3, **characterized in that** a $D_v50$ particle size of the lithium replenishment composite material is 2 $\mu$m to 30 $\mu$m; and/or

   a $D_v50$ particle size of the metal catalyst is 0.1 $\mu$m to 10 $\mu$m; and/or
   a thickness of the coating layer containing a conductive material is 2 nm to 100 nm; and/or
   a decomposition voltage of the lithium replenishment composite material is 4.12 V to 4.35 V.

5. The lithium replenishment composite material according to any one of claims 1 to 4, **characterized in that** a $D_v50$ particle size of the lithium replenishment composite material is 5 $\mu$m to 10 $\mu$m; and/or

   a $D_v50$ particle size of the metal catalyst is 0.5 $\mu$m to 5 $\mu$m; and/or
   a thickness of the coating layer containing a conductive material is 5 nm to 50 nm.

6. The lithium replenishment composite material according to any one of claims 1 to 5, **characterized in that** a mass ratio of the metal catalyst to the lithium replenishment agent is (1 to 30):100; or
a mass ratio of the metal catalyst to the lithium replenishment agent is (5 to 10):100.

7. A preparation method of the lithium replenishment composite material according to any one of claims 1 to 6, **characterized by** comprising the following steps:

   dissolving an organic lithium replenishment agent in a solvent to form a solution, and adding a metal catalyst to the solution to obtain a suspension;
   recrystallizing the suspension to obtain a core; and
   preparing a coating layer containing a conductive material outside the core to obtain the lithium replenishment composite material.

8. A positive electrode plate, **characterized by** comprising the lithium replenishment composite material according to any one of claims 1 to 6 or the lithium replenishment composite material obtained by using the preparation method according to claim 7.

9. The positive electrode plate according to claim 8, **characterized in that** the positive electrode plate comprises a positive electrode material, and the positive electrode material comprises the lithium replenishment composite material.

10. The positive electrode plate according to claim 9, **characterized in that** the positive electrode material further comprises a positive electrode active material;

a mass percentage of the lithium replenishment composite material in the positive electrode material is 0.5% to 20%; or
a mass percentage of the lithium replenishment composite material in the positive electrode material is 1% to 10%.

11. A separator, **characterized by** comprising the lithium replenishment composite material according to any one of claims 1 to 6 or the lithium replenishment composite material obtained by using the preparation method according to claim 7.

12. A secondary battery, **characterized by** comprising the positive electrode plate according to any one of claims 8 to 10 or the separator according to claim 11.

13. An electrical device, **characterized by** comprising the secondary battery according to claim 12.

FIG. 1

FIG. 2

Capacity retention rate after cycling at 60°C

FIG. 3

## INTERNATIONAL SEARCH REPORT

| International application No. |
|---|
| **PCT/CN2023/070168** |

### A. CLASSIFICATION OF SUBJECT MATTER

H01M4/62(2006.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, VEN, CNTXT, USTXT, EPTXT, WOTXT, CNKI, IEEE: 电池, 补锂, 富锂, 补充锂, 正极, 隔膜, 隔板, 核, 壳, 催化, 电位, 电压, 包覆, 保护层, 导电, 层, 有机, Li?C?O?, battery, complementary, lithium, rich, supplement+, refill+, positive, cathode, separator, core, shell, catalytic, catalyst?, potential, voltage, coating, protective, layer, conductive, organic

### C. DOCUMENTS CONSIDERED TO BE RELEVANT

| Category* | Citation of document, with indication, where appropriate, of the relevant passages | Relevant to claim No. |
|---|---|---|
| X | CN 112510247 A (SONGSHAN LAKE MATERIALS LABORATORY) 16 March 2021 (2021-03-16) description, paragraphs 4-85 | 1-13 |
| X | CN 114530634 A (HUAWEI TECHNOLOGIES CO., LTD.) 24 May 2022 (2022-05-24) description, paragraphs 41-96 | 1-13 |
| Y | CN 114464909 A (HUAZHONG UNIVERSITY OF SCIENCE AND TECHNOLOGY) 10 May 2022 (2022-05-10) description, paragraphs 16-61 | 1-13 |
| Y | CN 114552125 A (HUAZHONG UNIVERSITY OF SCIENCE AND TECHNOLOGY) 27 May 2022 (2022-05-27) description, paragraphs 6-42 | 1-13 |
| Y | CN 115312768 A (SHENZHEN DEFANGCHUANGYU NEW ENERGY TECHNOLOGY CO., LTD.) 08 November 2022 (2022-11-08) description, paragraphs 5-76 | 1-13 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 July 2023** | **19 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/070168**

**C.     DOCUMENTS CONSIDERED TO BE RELEVANT**

| Category* | Citation of document, with indication, where appropriate, of the relevant passages | Relevant to claim No. |
|---|---|---|
| Y | CN 112002894 A (SONGSHAN LAKE MATERIALS LABORATORY) 27 November 2020 (2020-11-27)<br>description, paragraphs 7-87 | 1-13 |

Form PCT/ISA/210 (second sheet) (July 2022)

**INTERNATIONAL SEARCH REPORT**
Information on patent family members

International application No.

**PCT/CN2023/070168**

| Patent document cited in search report | | | Publication date (day/month/year) | Patent family member(s) | | | Publication date (day/month/year) |
|---|---|---|---|---|---|---|---|
| CN | 112510247 | A | 16 March 2021 | None | | | |
| CN | 114530634 | A | 24 May 2022 | WO | 2022105259 | A1 | 27 May 2022 |
| CN | 114464909 | A | 10 May 2022 | CN | 114464909 | B | 26 July 2022 |
| CN | 114552125 | A | 27 May 2022 | CN | 114552125 | B | 16 August 2022 |
| CN | 115312768 | A | 08 November 2022 | None | | | |
| CN | 112002894 | A | 27 November 2020 | None | | | |

Form PCT/ISA/210 (patent family annex) (July 2022)